# EUROPEAN PATENT APPLICATION

(11) **EP 4 753 033 A1**
(43) Date of publication of application: **03.06.2026**
(21) Application number: 25219097.0
(22) Date of filing: 27.11.2025
(51) Int. Cl.: H01M 50/105, H01M 50/211, H01M 50/249

(54) **ELECTRIC ENERGY STORAGE DEVICE FOR MOTOR VEHICLES**

(30) Priority: 28.11.2024 IT 202400026949
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

An electrical energy storage device (1) comprising a case (2) defining an inner volume (3), which is hermetic, and a plurality of electrochemical cells (4) of the pouch type housed in the inner volume (3). The inner volume (3) is under pressure.

## Description

### CROSS-REFERENCE TO RELATED APPLICATIONS

This patent application claims priority from Italian patent application no. 102024000026949 filed on November 28, 2024, the entire disclosure of which is incorporated herein by reference.

### TECHNICAL FIELD

The invention relates to an electrical energy storage device, in particular an electric battery for a motor vehicle.

### BACKGROUND

Motor vehicles are known essentially comprising:
- a frame;
- a plurality of wheels rotatable relative to the frame about respective rotation axes;
- an electric motor operatively connected to at least some of the wheels; and
- an electrical energy storage device electrically connected to the electric motor, for example an electric battery.

Electric batteries generally comprise a case, inside which a plurality of electrochemical cells electrically connected to one another are housed.

In a known manner, electrochemical cells comprise a plurality of electrode layers (anode and cathode), between which respective separator layers are interposed. The layers of anode, cathode and separator are arranged according to an electrode-separator-electrode-separator pattern.

In order to ensure the correct operation of the electrochemical cells, it is appropriate that the layers of anode, cathode and separator are in adequate contact with one another and that the empty regions between the various layers are reduced as much as possible.

Therefore, electrochemical cells of the pouch type are known, in which the layers of anode, cathode and separator are stacked on top of one another and enclosed inside a pouch, in which a pressure lower than atmospheric pressure is maintained. Preferably, a vacuum condition is established inside the pouch. The difference in pressure between the outside and inside of the pouch causes the walls of the pouch to press the layers together.

However, it has been observed that such solution is not always sufficient to obtain an adequate compression of the layers of electrochemical cells of the pouch type.

It is also known that electric batteries undergo volume variations during the charging and discharging cycles and tend to increase in volume with ageing. Therefore, the need is also felt to ensure that the layers of the electrochemical cells of the pouch type are pressed to one another adequately even during such charging and discharging cycles and following the onset of ageing phenomena.

An object of the invention is to respond to at least one of the above-described needs, preferably in a simple and cost-effective manner.

### DESCRIPTION OF THE INVENTION

The object is achieved by an electrical energy storage device as defined in claim 1.

The dependent claims define particular embodiments of the invention.

### BRIEF DESCRIPTION OF THE DRAWINGS

In the following, an embodiment of the invention is described for a better understanding thereof, by way of non-limiting example and with reference to the accompanying drawings, wherein:
- Figure 1 is a perspective view of an electrical energy storage device according to the present invention;
- Figure 2 is a perspective view of the electrical energy storage device of Figure 1, with parts removed for clarity;
- Figure 3 is a top view of the electrical energy storage device of Figures 1 and 2; and
- Figure 4 is a perspective cutaway view of the electrical energy storage device of Figures 1 to 3.

### EMBODIMENTS OF THE INVENTION

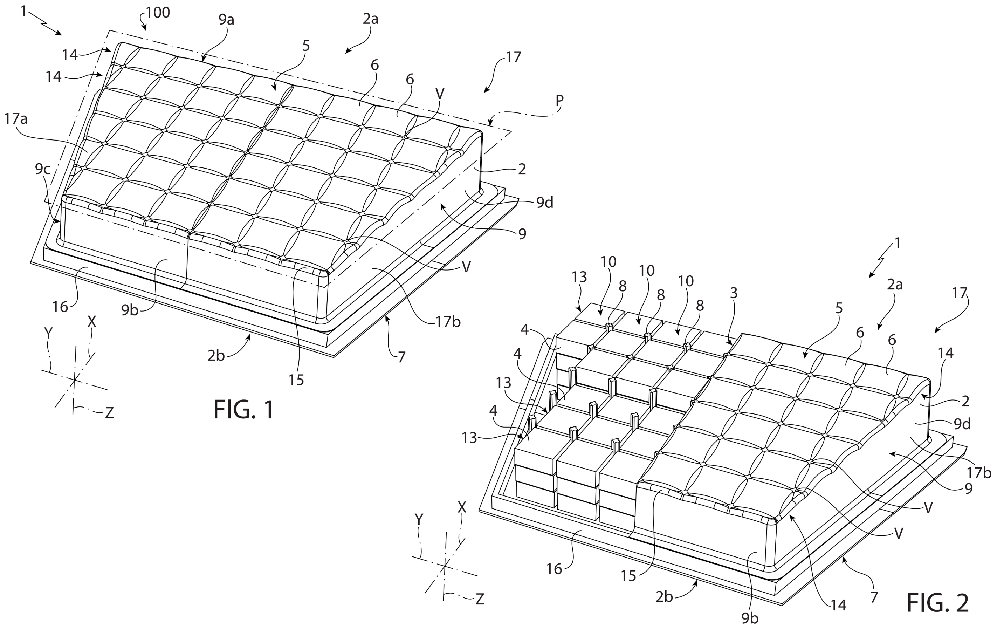

In Figure 1, the reference numeral 100 is used to indicate, as a whole, a motor vehicle - illustrated only in part - comprising an electrical energy storage device 1 according to the present invention.

The motor vehicle 100 is electrically or hybridly driven and comprises, in a known manner, a frame, a plurality of wheels which are rotatable with respect to the frame about respective rotation axes and an electric motor operatively connected to at least some of the wheels and electrically connected to the device 1.

The device 1 is an electric battery and comprises a case 2 defining an inner volume 3 and a plurality of electrochemical piles or cells 4 housed in such inner volume 3 and electrically connected to one another. For example, the electrochemical cells 4 are lithium-ion cells.

An integral reference system can be associated with the device 1, such system comprising a direction X, a direction Y and a direction Z, which are transversal to one another. Preferably, the directions X, Y and Z are orthogonal to one another. In addition, the direction Z is vertical to the ground on which the motor vehicle 100 rests; the direction X is parallel to a longitudinal extension direction of the motor vehicle 100.

In the illustrated embodiment, the case 2 has a prismatic or substantially prismatic shape and comprises:
- a first top surface 5;
- a second surface 7, which is opposed to the first surface 5 along the direction Z; and
- a lateral surface 9 interposed between the first surface 5 and the second surface 7 along the direction Z.

In detail, the second surface 7 is flat and serves as a base for the device 1. In further detail, the device 1 is fixed to the frame of the motor vehicle 100 at the second surface 7.

The second surface 7 comprises an edge 16, which extends from the part of the second surface 7 facing the first surface 5 parallel to the direction Z. Specifically, the edge 16 has a trapezoidal profile in a plane perpendicular to the direction Z (Figures 1 and 2).

The case 2 further comprises an end 2a and an end 2b, which are opposed to each other parallel to the direction X. Preferably, the end 2a faces a rear portion of the motor vehicle 100 and the end 2b faces a front portion of the motor vehicle 100 considering a travel direction of the motor vehicle 100.

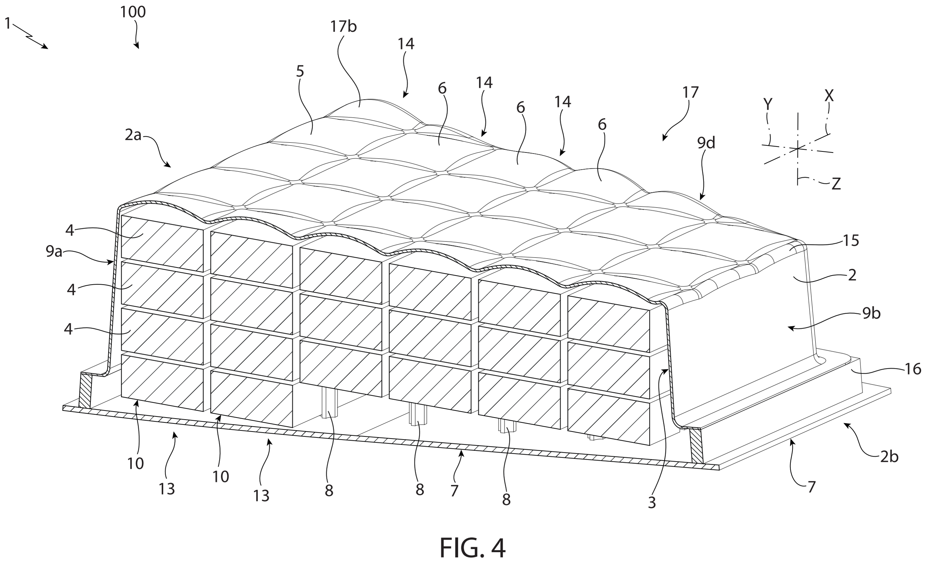

As illustrated in Figure 4, the distance between the first surface 5 and the second surface 7 parallel to the direction Z progressively decreases proceeding from the end 2a to the end 2b along the direction X. In other words, the first surface 5 is inclined with respect to the second surface 7.

Furthermore, in the non-limiting embodiment illustrated, the case 2 has a trapezoidal-shaped section in a plane orthogonal to the direction Z.

The lateral surface 9 comprises, in turn (Figure 1):
- a face 9a arranged on the side of the end 2a;
- a face 9b arranged on the side of the end 2b;
- a face 9c interposed between the faces 9a and 9b along the direction X; and
- a face 9d, also interposed between the faces 9a and 9b along the direction X and facing away from the face 9c along the direction Y.

In detail, the faces 9a, 9b, 9c and 9d are arranged transversely to the direction Z. In further detail, proceeding from the first surface 5 to the second surface 7 parallel to the direction Z, the faces 9a, 9b, 9c and 9d diverge. Specifically, proceeding parallel to the direction X from the face 9a to the face 9b, the distance of the points of the face 9a from the second surface 7 parallel to the direction Z progressively increases (Figure 4); proceeding parallel to the direction X from the face 9b to the face 9a, the distance of the points of the face 9b from the second surface 7 parallel to the direction Z progressively increases (Figure 4); proceeding parallel to the direction Y from the face 9c to the face 9d, the distance of the points of the face 9c from the second surface 7 parallel to the direction Z progressively increases; proceeding parallel to the direction Y from the face 9d to the face 9c, the distance of the points of the face 9d from the second surface 7 parallel to the direction Z progressively increases.

The inner volume 3 is hermetically sealed, that is, it is permanently fluidically isolated from the external atmospheric air. In other words, the inner volume 3 is a closed system and does not exchange mass with the outside. External atmospheric air must be understood as the air outside the inner volume 3. In particular, the external atmospheric air could be inside the motor vehicle 100 or come directly from outside the motor vehicle 100.

The first surface 5 and the lateral surface 9 are integral with each other and form a cover 17 of the case 2. In detail, the lateral surface 9 is adapted to be hermetically fixed to the second surface 7 at the edge 16.

Preferably, the cover 17 is divided into two halves 17a, 17b, which are symmetrical to each other with respect to a centreline plane of the case 2 parallel to the direction Z orthogonal to the direction Y. Figure 2 illustrates the case 3 deprived of one (17a) of the two halves 17a, 17b.

The electrochemical cells 4 are of the pouch type. In a known manner, the electrochemical cells 4 comprise a plurality of layers of anode, cathode and separator closed inside a pouch, at which a pressure lower or much lower than the atmospheric pressure is established.

Preferably, moreover, the electrochemical cells 4 are parallelepiped in shape and are identical to one another.

As illustrated in Figures 2 and 4, the electrochemical cells 4 are stacked on top of one another parallel to the direction Z, forming respective groups 10 of electrochemical cells 4 stacked on top of one another.

The groups 10, in turn, are aligned with one another parallel to the direction X and/or the direction Y. In particular, the device 1 comprises a plurality of rows 13 of groups 10 aligned with one another parallel to the direction Y. In addition, the groups 10 within a row 13 are aligned along the direction X with respective groups 10 forming part of the other rows 13.

In detail, the groups 10 are spaced from the adjacent groups 10 within a same row 13 along the direction Y. In addition, the rows 13 are spaced from one another parallel to the direction X.

Preferably, the distance parallel to the direction Y is the same for all the pairs of groups 10 belonging to the same row 13. Similarly, the distance between the rows 13 parallel to the direction X is the same for all the pairs of rows 13.

The first surface 5 comprises a plurality of curved regions 6. In detail, each curved region 6 is aligned with a respective group 10 along the direction Z.

Each curved region 6 has a concavity facing the electrochemical cells 4 from the part of the inner volume 3. At the same time, each curved region 6 is convex on the side of the outer part of the case 2. That is, each curved region 6 can be understood as a dome.

In detail, the first surface 5 comprises a plurality of rows 14 of curved regions 6 aligned with each other parallel to the direction Y. In addition, the curved regions 6 within one row 14 are aligned along the direction X with respective curved regions 6 forming part of the other rows 14. Preferably, the first surface 5 comprises curved regions 6 along its entire extension.

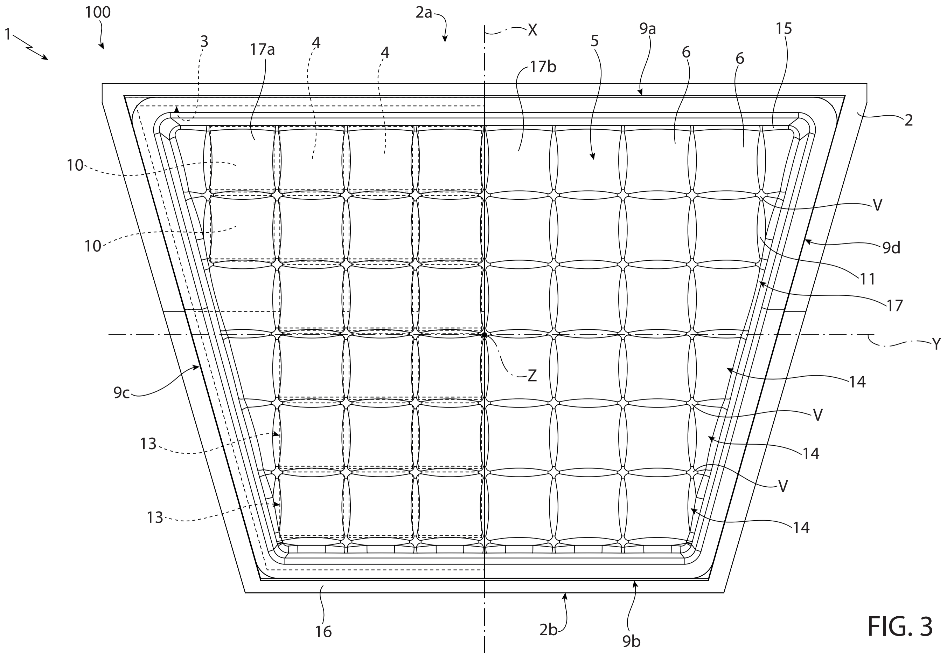

As illustrated in Figure 3, each curved region 6 is defined by a quadrilateral 11 in a plane P tangent to the first surface 5 and orthogonal to the direction Z.

Each quadrilateral 11 comprises four vertices V. In addition, the vertices V of all the quadrilaterals 11 are coplanar with one another. In detail, the vertices V lie on the same plane parallel to the plane P (Figure 1).

Preferably, orthogonally to the direction Z, the quadrilaterals 11 have a greater extension parallel to the plane P than the extension of the electrochemical cells 4.

In detail, two curved regions 6 adjacent to each other along a row 14 share two vertices V; similarly, two curved regions 6 aligned with each other along the direction X share two further vertices V.

Preferably, moreover, all or most of the curved regions 6 are identical to one another. In addition, preferably, all or most of the curved regions 6 have the same curvature.

The device 1 further comprises a plurality of tie-rods 8 extending from the first surface 5 to the second surface 7 parallel to the direction Z. In detail, the tie-rods 8 extend in the inner volume 3 (Figures 2 and 4).

The tie-rods 8 are constrained to the first surface 5 and to the second surface 7 at respective ends opposed to each other parallel to the direction Z, in order to keep the first surface 5 and the second surface 7 in tension. In particular, the tie-rods 8 are subjected essentially or only to tensile loads, i.e. they are subjected to stresses acting parallel to the direction Z.

Preferably, the tie-rods 8 are made of a material with high tensile strength. For example, the tie-rods 8 are made of carbon fibre or another wire material.

In detail, the tie-rods 8 are interposed between the groups 10 parallel to the direction X and/or the direction Y. In further detail, the device 1 comprises two tie-rods 8 interposed parallel to the direction Y between each pair of groups 10 belonging to a same row 13. Similarly, the device 1 comprises two tie-rods 8 interposed parallel to the direction X between each pair of groups 10 aligned with each other along the direction X and belonging to adjacent rows 13 (Figure 2).

Specifically, each tie-rod 8 extends from a respective vertex V of a quadrilateral 11 to the base surface 7 parallel to the direction Z.

In the illustrated embodiment, the tie-rods 8 have a transversal section in the shape of a cross with four arms in a plane orthogonal to the direction Z. In detail, the four arms of the cross shape are connected to one another.

Preferably, the section of the tie-rods 8 orthogonally to the direction Z is the same for all the tie-rods 8. In addition, the section of the tie-rods 8 is of constant extension along the direction Z.

The case 3 further comprises a fillet portion 15 between the first surface 5 and the lateral surface 9 (see Figures 1, 2 and 4). In detail, the fillet portion 15 extends between the first surface 5 and each of the faces 9a, 9b, 9c and 9d.

Preferably, the case 2 comprises carbon fibre. In detail, at least the first surface 5 is made of carbon fibre. In further detail, the tie-rods 8 are fixed to the first surface 5, for example, by means of a sewing operation or a similar operation. Furthermore, the inner volume 3 contains a gaseous medium comprising an inert gas (for example, nitrogen or carbon dioxide). In detail, the inner volume 3 contains at least 88% of its volume as inert gas. Inert gas can also be understood as a mixture of inert gases.

Advantageously, the inner volume 3 is under pressure. In detail, the gaseous medium contained in the inner volume 3 has a relative pressure greater than or equal to 1 bar. In further detail, the gaseous medium contained in the inner volume 3 has a relative pressure of the order of tens of bars. For example, the gaseous medium contained in the inner volume 3 has a relative pressure greater than or equal to 10 bar.

The operation of the motor vehicle 100 and the device 1 is described in the following.

In use, during the use of the motor vehicle 100, the device 1 is subjected to cycles of electrical charging and electrical discharging and provides electrical energy to the electric motor. In the cycles of electrical charging and discharging, the electrochemical cells 4 undergo volume variations. The electrochemical cells 4 also tend to increase in volume over time also due to ageing.

During operation, the pressure of the inert gas contained in the inner volume 3 is exerted on the electrical cells 4, allowing the anode, cathode and separator layers to be effectively pressed.

The pressure exerted by the inert gas against the walls of the inner volume 3 is instead counteracted by the tie-rods 8.

Based on the foregoing, the advantages according to the invention are evident.

Since the inner volume 3 is under pressure, the anode, cathode and separator layers of the electrochemical cells 4, which are of the pouch type, can be pressed into contact with one another very efficiently and in a cost-effective manner. In fact, the pressure difference between the outside and the inside of the electrochemical cells 4 is increased with respect to the case in which the pressure outside the electrochemical cells 4 is equal to the atmospheric value.

Due to the fact that the inner volume 3 contains the inert gas under pressure, such pressure is exerted in a uniform or substantially uniform manner on all the electrochemical cells 4 and the volume variations of the electrochemical cells 4 due to the charging and discharging cycles and ageing can be counteracted very effectively.

Since the inner volume 3 contains an inert gas, it is possible to reduce the risk of thermal runaway and/or spark formation.

Since the first surface 5 comprises at least one curved region 6, the case 3 is capable of efficiently distributing the tensions due to the pressure of the inert gas contained in the inner volume 3 and any tensions due to the volume variations of the electrochemical cells 4. In fact, the shape of the curved regions 6 allows guaranteeing the desired mechanical strength even with a lower weight compared to a case in which the first surface 5 is completely flat.

Since the device 1 comprises the tie-rods 8, the deformations of the case 2 parallel to the direction Z can be counteracted in a simple and efficient manner.

Since the case 2 is made at least in part of carbon fibre, it is provided with high rigidity even with a low weight. Moreover, the carbon fibre is particularly suitable to be shaped according to the geometry of the first surface 5.

Finally, it is clear that modifications and variations can be made to the electrical energy storage device 10 and to the motor vehicle 100 according to the invention without however departing from the scope of protection defined by the claims.

The first surface 5 could comprise a single curved region 6.

Alternatively or additionally, the curved regions 6 could be arranged differently from what is illustrated.

The tie-rods 8 could have a transversal section of a shape different from that illustrated. In particular, the tie-rods 8 could have a polygonal or circular section.

The first surface 5 could be made of metal, for example steel. In detail, the first surface 5 could comprise a plurality of holes, each at a respective vertex V, and the device 1 could comprise a plurality of axial locking devices, for example nuts. Each tie-rod 8 could then be passed through a respective hole and engaged by a respective nut on the side of the first surface 5 facing away from the inner volume 3.

The lateral surface 9 and, in particular, the faces 9a, 9b, 9c, 9d could be curved and/or each comprise a respective plurality of curved regions. For example, the curved regions of the faces 9a, 9b, 9c, 9d could be shaped similarly to the curved regions 6. In addition, such curved regions could be operatively connected to respective tie-rods.

## Claims

1. An electrical energy storage device (1) comprising:
- a case (2) defining an inner volume (3), which is hermetic; and
- a plurality of electrochemical cells (4) of the pouch type housed in said inner volume (3);
**characterized in that** said inner volume (3) is under pressure.

2. The electrical energy storage device according to claim 1, wherein said inner volume (3) is a closed system.

3. The electrical energy storage device according to claim 1 or 2, wherein said inner volume (3) contains, in use, a gaseous medium having a relative pressure greater than 1 bar.

4. The electrical energy storage device according to claim 3, wherein said gaseous medium has a relative pressure greater than or equal to 10 bar.

5. The electrical energy storage device according to claim 3 or 4, wherein said gaseous medium comprises an inert gas.

6. The electrical energy storage device according to any one of the preceding claims, **characterized in that** said case (2) comprises a first surface (5) comprising at least one curved region (6).

7. The electrical energy storage device according to claim 6, wherein said electrochemical cells (4) are stacked on top of one another parallel to a first direction (Z);
said device (1) further comprising:
- a second surface (7) opposite to said first surface (5) along said first direction (Z); and
- at least one tie-rod (8) extending from said first surface (5) to said second surface (7) parallel to said first direction (Z).

8. The electrical energy storage device according to claim 7, wherein said device (1) comprises a plurality of groups (10) of electrochemical cells (4) stacked on top of one another parallel to said first direction (Z);
said groups (10) being aligned with one another parallel to a second direction (X) and/or parallel to a third direction (Y); said second direction (X) and said third direction (Y) being transversal to each other and said first direction (Z);
wherein said first surface (5) comprises a plurality of curved regions (6), each of which is aligned with a respective group (10) along said first direction (Z).

9. The electrical energy storage device according to claim 8, wherein at least some of said curved regions (6) are adjacent and/or contiguous to one another; and/or
wherein all or most of said curved regions (6) are identical to one another.

10. The electrical energy storage device according to any one of the preceding claims, wherein each said curved region (6) is delimited by a quadrilateral (11) in a plane (P) orthogonal to said first direction (Z); each quadrilateral (11) comprising four vertices (V);
said device (1) comprising a plurality of said tie-rods (8); each said tie-rod (8) extending from a respective vertex (V) to said base surface (7) parallel to said first direction (Z).

11. The electrical energy storage device according to claims 9 and 10, wherein said curved regions (6) adjacent and/or contiguous to one another share at least one said vertex (V).

12. The electrical energy storage device according to claim 10 or 11, wherein said vertices (V) of all said curved regions (6) are coplanar with one another.

13. The electrical energy storage device according to any one of the preceding claims, wherein said at least one curved region (6) has concavity arranged so as to face said electrochemical cells (4) at said inner volume (3).

14. The electrical energy storage device according to any one of the preceding claims, wherein said case (2) comprises carbon fibre or a metal.

15. A motor vehicle (100) comprising an electrical energy storage device (1) according to any one of the preceding claims.
